# EUROPÄISCHE PATENTSCHRIFT

(11) **EP 4 180 177 B1**
(45) Veröffentlichungstag und Bekanntmachung des Hinweises auf die Patenterteilung: **11.03.2026**
(21) Anmeldenummer: 22206902.3
(22) Anmeldetag: 11.11.2022
(51) Int. Cl.: B24B 13/00

(54) **BEARBEITUNGSVORRICHTUNG FÜR OPTISCHE WERKSTÜCKE**
MACHINING DEVICE FOR OPTICAL WORKPIECES
DISPOSITIF D'USINAGE POUR PIÈCES OPTIQUES

(30) Priorität: 12.11.2021 DE 102021005630; 11.02.2022 DE 102022000537
(43) Veröffentlichungstag der Anmeldung: 17.05.2023
(73) Patentinhaber: Schneider GmbH & Co. KG, 35112 Fronhausen (DE)
(72) Erfinder: HOFMANN, Klaus, 61273 Wehrheim (DE); BUCHENAUER, Helwig, 35232 Dautphetal (DE); MAHNER, Marcel, 35112 Fronhausen (DE)
(74) Vertreter: Von Rohr Patentanwälte Partnerschaft mbB

(56) Entgegenhaltungen:
- EP-A1- 1 719 582
- DE-A1- 102006 050 425
- DE-A1- 102015 102 900
- DE-A1- 102018 007 494

## Beschreibung

Die vorliegende Erfindung betrifft eine Bearbeitungsvorrichtung zur insbesondere spanenden Bearbeitung von optischen Werkstücken, insbesondere Linsen bzw. Brillengläsern, gemäß dem Oberbegriff des Anspruchs 1.

Optische Werkstücke, insbesondere Linsen bzw. Brillengläser, werden zur Formgebung vorzugsweise spanend, insbesondere durch Fräsen und/oder Drehen flachseitig bearbeitet.

Die DE 10 2015 102 900 A1 offenbart eine Fertigungseinrichtung für Brillengläser mit einer Fräsvorrichtung und einer Drehvorrichtung sowie einer Wechseleinrichtung. Die Drehvorrichtung weist zwei Drehstationen auf, die ihrerseits jeweils eine Werkstückspindel und einen zugeordneten Fast-Tool-Antrieb mit einem Drehwerkzeug umfassen. Die Werkstückspindeln sind mittels eines Kreuzschlittens quer zu den Drehwerkzeugen und in Richtung der Drehwerkzeuge bewegbar. Die Fräsvorrichtung weist ebenfalls eine Werkstückspindel auf einem Kreuzschlitten und zwei zugeordnete Fräsantriebe auf. Die Werkstückspindeln sind parallel zueinander und in der gleichen Richtung ausgerichtet. Mittels der Wechseleinrichtung kann ein Linsenrohling nach dem Fräsen der Fräsvorrichtung entnommen und an die Drehvorrichtung übergeben werden. Die Wechseleinrichtung umfasst zwei Greifeinrichtungen, die jeweils zwei um 90° voneinander wegweisende Sauger aufweisen, wobei die Greiforgane gemeinsam linear bewegbar und gemeinsam um eine Drehachse schwenkbar sind. Zum Wechseln der Linsenrohlinge müssen die Werkstückspindeln jeweils in eine Ladeposition zwischen der Fräsvorrichtung und der Drehvorrichtung bewegt und muss außerdem die Wechseleinrichtung zwischen den beiden Vorrichtungen über eine relativ weite Strecke linear quer zu den Spindelachsen von der Fräsvorrichtung zu der Drehvorrichtung und umgekehrt bewegt werden.

Die DE 10 2006 050 425 A1 offenbart eine Vorrichtung zum Fräsen und Drehen von Linsen mit einer Frässtation und einer Drehstation sowie einer Wechseleinrichtung. Die Frässtation weist eine auf einem Kreuzschlitten angeordnete Werkstückspindel sowie einen zugeordneten Fräsantrieb mit einem Fräswerkzeug auf. Die Drehstation weist eine auf einem Kreuzschlitten angeordnete Werkstückspindel und einen zugeordneten Fast-Tool-Antrieb mit einem Drehwerkzeug auf. Die beiden Werkstückspindeln sind parallel zueinander und in der gleichen Richtung ausgerichtet sowie wahlweise in eine Ladeposition zwischen den beiden Stationen bewegbar. Die Wechseleinrichtung dient dem Be- und Entladen mit den Linsen in der Ladeposition. Zum Wechseln der Linsen müssen die Werkstückspindeln abwechselnd in die Ladeposition bewegt werden. Die Wechseleinrichtung weist einen Schwenkarm mit einem an seinem freien Ende angeordneten Greiforgan auf, das seinerseits zwei voneinander wegweisende Sauger aufweist und um eine weitere Schwenkachse schwenkbar ist, die schräg zur Spindelachse und senkrecht zur Schwenkachse des Schwenkarms verläuft. Zum Wechseln der jeweiligen Linse an einer Werkstückspindel ist der Schwenkarm linear bewegbar und ist das Greiforgan schwenkbar.

Die DE 43 10 038 A1 offenbart eine Drehmaschine mit zwei gegenüberliegenden Werkstückspindeln, die jeweils in Richtung der Spindelachse sowie quer dazu verfahrbar sind. Ein Werkstück wird ohne Zuhilfenahme einer Wendeeinrichtung nur durch die Verfahrbewegung der Spindeln von einer Werkstückspindel zur anderen Werkstückspindel übergeben. Nachdem eine erste Werkstückseite mittels der ersten Werkstückspindel bearbeitet wurde, wird so eine zweite Werkstückseite mittels der zweiten Werkstückspindel bearbeitet. Eine sequenzielle Bearbeitung der gleichen Werkstückfläche durch die beiden Werkstückspindeln ist nicht möglich.

Die DE 10 2007 045 591 A1 offenbart eine Bearbeitungsmaschine zur Bearbeitung von Werkstücken, insbesondere zur Fräs- und/oder Drehbearbeitung von stangenförmigen Werkstücken, mit zwei Werkstückspindeln, die in zwei Raumrichtungen verfahrbar sind. Zum beidseitigen Bearbeiten kann eine direkte Übergabe zwischen den beiden Werkstückspindeln stattfinden. Eine sequenzielle Bearbeitung der gleichen Werkstückfläche durch die beiden Werkstückspindeln ist nicht möglich.

Der vorliegenden Erfindung liegt die Aufgabe zugrunde, eine Bearbeitungsvorrichtung anzugeben, die eine insbesondere spanende Bearbeitung von optischen Werkstücken, insbesondere Linsen bzw. Brillengläsern, mit hohem Durchsatz, hoher Präzision und/oder kurzen Wechselzeiten und/oder einen einfachen bzw. kompakten Aufbau ermöglicht.

Die obige Aufgabe wird durch eine Bearbeitungsvorrichtung gemäß Anspruch 1 gelöst. Vorteilhafte Weiterbildungen sind Gegenstand der Unteransprüche.

Die Bearbeitungsvorrichtung weist eine Frässtation mit einer ersten Werkstückspindel und eine Drehstation mit einer zweiten Werkstückspindel sowie eine Wechseleinrichtung zum Wechseln der zu bearbeitenden Werkstücke bzw. Linsen auf.

Gemäß einem ersten Aspekt der vorliegenden Erfindung weisen die Werkstückspindeln oder deren Spannfutter zueinander, vorzugsweise ist die Wechseleinrichtung dazwischen angeordnet. Dies ermöglicht eine optimierte Anordnung der Wechseleinrichtung, insbesondere so dass durch Schwenken der Wechseleinrichtung ein besonders schneller Wechsel der Werkstücke bzw. Linsen zwischen der Frässtation und Drehstation ermöglicht wird.

Vorzugsweise ist die Wechseleinrichtung dazu ausgebildet bzw. so angeordnet, dass das Werkstück mit der gleichen, insbesondere einer geblockten, Seite an die jeweiligen Werkstückspindeln übergeben wird bzw. übergeben werden kann, und/oder dass eine Bearbeitung der gleichen Seite bzw. gleichen Fläche mittels der Frässtation und der Drehstation erfolgen kann.

Die Drehstation und die Frässtation weisen vorzugsweise jeweils nur maximal zwei gestapelte Bewegungsachsen auf. Dies ist einem einfachen Aufbau und/oder einer hohen Präzision bei der Bearbeitung zuträglich.

"Gestapelte Bewegungsachsen" sind vorzugsweise übereinander gestapelte bzw. miteinander gekoppelte Achsen bzw. Achsen eines einzelnen beweglichen Teils der Station bzw. Einrichtung, insbesondere die Bewegungsachsen der Werkstückspindel und/oder des Werkzeugs. Vorzugsweise sind zwei Bewegungsachsen "gestapelt" bzw. "miteinander gekoppelt", wenn eine der Bewegungsachsen bei Bewegung entlang der anderen Bewegungsachse mitverschoben wird.

Mit anderen Worten kann sich vorzugsweise die Werkstückspindel einer Station nur maximal in zwei Richtungen bzw. entlang zweier Achsen bewegen und das Werkzeug ebenso maximal in zwei Richtungen bzw. entlang zweier Achsen.

Insgesamt kann die jeweilige Station mehr als zwei Bewegungsachsen aufweisen, beispielsweise vier Bewegungsachsen, wobei dann vorzugsweise die Werkstückspindel zwei gestapelte Bewegungsachsen und das Werkzeug ebenfalls zwei gestapelte Bewegungsachsen aufweisen, so dass die Station dann insgesamt nur maximal zwei gestapelte Bewegungsachsen aufweist. Mit anderen Worten weist die Station nirgendwo drei oder mehr gestapelte Achsen auf.

Es ist auch möglich, dass die Station oder einzelne Teile davon keine gestapelten Achsen aufweist. Beispielsweise könnte die Werkzeugspindel und/oder das Werkzeug nur in eine Richtung bewegbar sein bzw. nur eine Bewegungsachse aufweisen.

Vorzugsweise sind unter gestapelten Bewegungsachsen nur Achsen für lineare Bewegungen zu verstehen. Zu den nur maximal zwei gestapelten (linearen) Bewegungsachsen können also noch eine oder mehrere Drehachsen hinzukommen.

Die Wechseleinrichtung weist vorzugsweise einen Doppelgreifer auf, der um eine insbesondere zentrale Wendeachse drehbar und entlang dieser linear bewegbar und/oder - insbesondere mittels eines Kurvengetriebes - zur überlagerten Dreh- und Linearbewegung ausgebildet ist. Dies ist wiederum einem einfachen Aufbau und/oder einer kurzen Wechselzeit und damit einem hohen Durchsatz zuträglich.

Besonders bevorzugt weist der Doppelgreifer zwei Greiforgane, insbesondere Sauger auf, die parallel zueinander in die gleiche Richtung weisen.

Vorzugsweise weist die Frässtation einen ersten Schlitten mit einer Werkstückspindel und einen zweiten Schlitten mit einem Fräsantrieb sowie ein Maschinenbett auf, wobei das Maschinenbett den ersten Schlitten auf einer ersten Lagerfläche und den zweiten Schlitten auf einer zweiten Lagerfläche lagert.

Vorzugsweise sind die beiden Lagerflächen des(selben) Maschinenbetts um mehr als 45°, insbesondere um etwa 70° bis 85°, zueinander geneigt. Alternativ oder zusätzlich verläuft die zweite Lagerfläche vorzugsweise parallel zur Drehachse des Fräsantriebs. Insbesondere ist die Schlittenführung des zweiten Schlittens unmittelbar ohne Zwischenelemente auf der zweiten, vorzugsweise fast vertikalen Lagerfläche des Maschinenbetts befestigt. Hierdurch wird ein besonders stabiler und schwingungsarmer Aufbau bei insbesondere minimaler Anzahl von gestapelten Bewegungsachsen ermöglicht. Dies ist einem einfachen Aufbau und/oder einer hohen Präzision bei der Bearbeitung zuträglich.

Vorzugsweise weist die Drehstation eine Werkstückspindel und einen ersten Fast-Tool-Antrieb auf und ist insbesondere zum Stirndrehen ausgebildet.

Die Drehstation weist vorzugsweise einen zweiten bzw. zusätzlichen Fast-Tool-Antrieb auf, der anders als der erste Fast-Tool-Antrieb aufgebaut ist und/oder der zur alternativen bzw. sequenziellen Bearbeitung desselben Werkstücks, insbesondere zur Bearbeitung der gleichen Seite bzw. Fläche des Werkstücks, vorgesehen ist. Dies ermöglicht eine insbesondere zweistufige Drehbearbeitung (z.B. erst gröber/schneller, dann feiner/langsamer) desselben Werkstücks. Dies ist einem hohen Durchsatz und/oder einer hohen Präzision bei der Bearbeitung zuträglich.

Die Drehstation weist vorzugsweise eine Keilverstellung für den Fast-Tool-Antrieb bzw. die Fast-Tool-Antriebe auf, insbesondere wobei die Schräge bzw. stärkste Neigung der Keilverstellung quer zur Fast-Tool-Bewegungsachse bzw. Spindelachse der Werkstückspindel verläuft. Dies ist einem einfachen und/oder kompakten Aufbau bzw. einer Minimierung der gestapelten Bewegungsachsen zuträglich.

Der Fast-Tool-Antrieb weist vorzugsweise zwei Werkzeuge bzw. Werkzeughalter zur alternativen bzw. sequenziellen Bearbeitung eines Werkstücks, insbesondere zur Bearbeitung der gleichen Seite bzw. gleichen Fläche des Werkstücks, und/oder eine Werkzeugkühlung auf. Dies ist wiederum einem hohen Durchsatz und/oder einer hohen Präzision bei der Bearbeitung zuträglich.

Eine bevorzugte Verwendung eines Doppelgreifers sieht vor, dass der Doppelgreifer um eine Wendeachse drehbar und entlang dieser linear bewegbar und insbesondere mittels eines Kurvengetriebes zur überlagerten Dreh- und Linearbewegung ausgebildet ist, um die Werkstücke zur Bearbeitung, insbesondere zur Bearbeitung der gleichen Seite bzw. gleichen Fläche des Werkstücks, in einer Bearbeitungsvorrichtung oder Bearbeitungsstation bzw. zwischen verschiedenen Bearbeitungsstationen der Bearbeitungsvorrichtung zu wechseln. Alternativ oder zusätzlich übergibt der Doppelgreifer vorzugsweise simultan ein noch zu bearbeitendes Werkstück und ein bereits bearbeitetes Werkstück an unterschiedliche Einrichtungen, insbesondere mittels einer Linearbewegung. Dies ermöglicht insbesondere sehr kurze Wechselzeiten bzw. schnelle Bewegungen, also einen hohen Durchsatz, sowie einen einfachen Aufbau.

Weitere Aspekte, Merkmale, Vorteile und Eigenschaften der vorliegenden Erfindung ergeben sich aus den Ansprüchen und der nachfolgenden Beschreibung einer bevorzugten Ausführungsform anhand der Zeichnung. Es zeigt:
- Fig. 1: eine schematische Draufsicht einer vorschlagsgemäßen Bearbeitungsvorrichtung mit einer Frässtation, einer Drehstation und einer Wechseleinrichtung;
- Fig. 2: eine schematische Seitenansicht der Bearbeitungsvorrichtung;
- Fig. 3: eine perspektivische Ansicht der Wechseleinrichtung mit einem Doppelgreifer;
- Fig. 4: eine schematische Seitenansicht der Drehstation,
- Fig. 5: eine Vorderansicht eines Fast-Tool-Antriebs der Drehstation; und
- Fig. 6: eine perspektivische Rückansicht eines Fräswerkzeugs der Frässtation.

In den Figuren werden für gleiche Komponenten und Bauteile die gleichen Bezugszeichen verwendet, wobei sich entsprechende Eigenschaften und Vorteile ergeben, auch wenn eine wiederholte Beschreibung weggelassen ist.

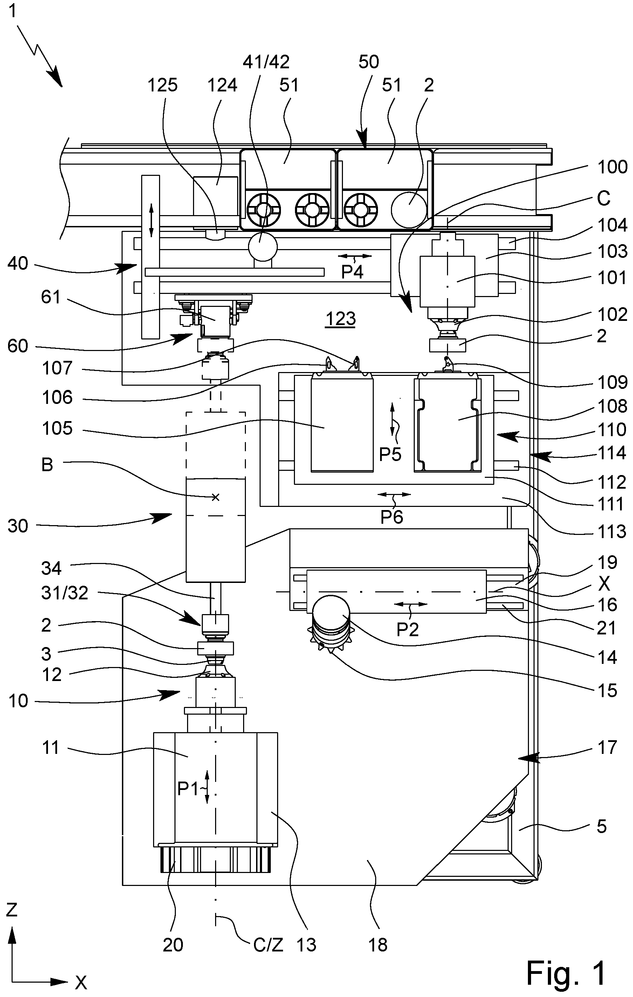

Fig. 1 zeigt in einer schematischen Draufsicht eine vorschlagsgemäße Bearbeitungsvorrichtung 1 zur insbesondere spanenden Bearbeitung von optischen Werkstücken, insbesondere Linsen 2.

Besonders bevorzugt handelt es sich bei dem Werkstück bzw. der Linse 2 um ein sogenanntes Brillenglas, also eine Linse 2 für eine Brille. Nachfolgend wird anstelle vom optischen Werkstück teilweise auch nur von der Linse 2 gesprochen, auch wenn es sich optional auch um ein sonstiges optisches Werkstück, wie einen Spiegel o. dgl. handeln kann.

Das Werkstück bzw. die Linse 2 besteht vorzugsweise aus Kunststoff, kann ggf. aber auch aus Glas o. dgl. bestehen.

Das Werkstück bzw. die Linse 2 weist vorzugsweise einen Durchmesser von mehreren Zentimetern, insbesondere von mehr als drei Zentimetern auf.

Bei der Bearbeitung erfolgt vorzugsweise eine Formgebung bzw. spanende Bearbeitung - insbesondere ausschließlich - einer optischen Fläche bzw. Flachseite der Linse 2, insbesondere zur Erzeugung einer sogenannten Freiformfläche, beispielsweise für ein sogenanntes Rezeptglas, also für ein individuell an einen Träger angepasstes Brillenglas. Insbesondere erfolgt keine Randbearbeitung in der Bearbeitungsvorrichtung 1, wobei dies jedoch auch optional möglich ist.

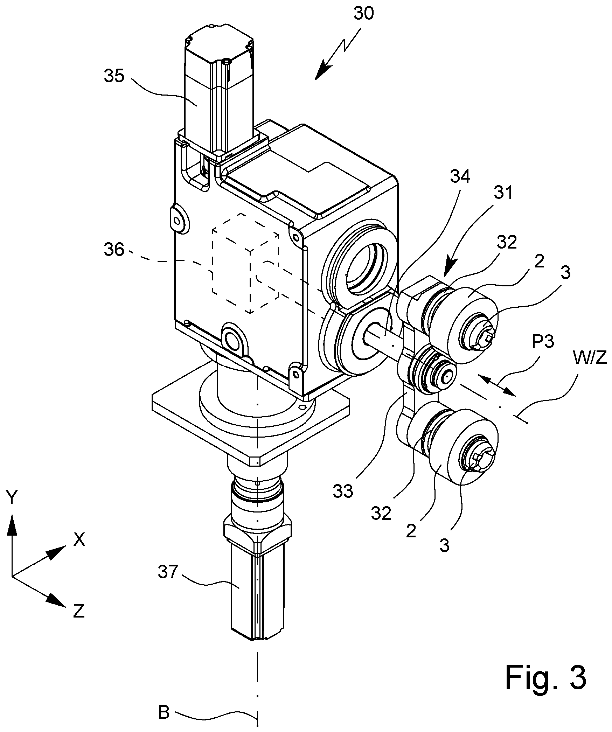

Vorzugsweise wird die Linse 2 im geblockten Zustand bearbeitet. Die Linse 2 ist also vorzugsweise mit einem temporären Halter, einem sogenannten Blockstück 3, wie insbesondere in Fig. 3 angedeutet, versehen, um die Linse 2 insbesondere definiert bzw. sehr einfach während der Bearbeitung halten zu können.

Jedoch ist grundsätzlich auch eine blocklose Bearbeitung bzw. sonstige Halterung bei der Bearbeitung in der Bearbeitungsvorrichtung 1 möglich.

Vorzugsweise wird die Linse 2 in der Bearbeitungsvorrichtung 1 ausschließlich an einer bzw. der gleichen (Flach-)Seite bzw. (optischen) Fläche bearbeitet, insbesondere der blockstückfreien Seite/Fläche.

Die Bearbeitungsvorrichtung 1 weist eine Frässtation 10, eine Drehstation 100, und eine Wechseleinrichtung 30 auf, optional eine Ladeeinrichtung 40, eine Fördereinrichtung 50 und/oder eine Übergabeeinrichtung 60, wie in Fig. 1 gezeigt.

Die Frässtation 10 weist eine Werkstückspindel 11 insbesondere mit einem Spannfutter 12 zur, insbesondere blockstückseitigen, Aufnahme der Linse 2 auf und dient insbesondere einer fräsenden Bearbeitung (Fräsen) der Linse 2, also einer Bearbeitung mit einer definierten Schneide, wobei sich die Schneide(n) eines Fräswerkzeugs 15 wesentlich schneller als die Linse 2 bewegt bzw. bewegen.

Die Drehstation 100 weist eine Werkstückspindel 101 insbesondere mit einem Spannfutter 102 zur, insbesondere blockstückseitigen, Aufnahme der Linse 2 auf und dient insbesondere einer drehenden Bearbeitung (Drehen) der Linse 2, besonders bevorzugt durch Stirndrehen. Hierbei wird die Schneidgeschwindigkeit der spanenden Bearbeitung insbesondere durch die Rotationsgeschwindigkeit der Linse 2 bestimmt.

Vorzugsweise erfolgt die fräsende und die drehende Bearbeitung an der gleichen (Flach-)Seite bzw. (optischen) Fläche der Linse 2.

Die Wechseleinrichtung 30 dient einem Wechsel bzw. einer Übergabe der Linse 2 von der Frässtation 10 zu der Drehstation 100, insbesondere für die (sequenzielle) Bearbeitung der gleichen Seite/Fläche der Linse 2 mittels der Frässtation 10 und der Drehstation 100, einer Beschickung der Frässtation 10 bzw. Drehstation 100 mit einer zu bearbeitenden Linse 2 und/oder der Entnahme einer bearbeiteten Linse 2 von der Frässtation 10 und/oder Drehstation 100 und/oder einer Übergabe bzw. Übernahme der Linse 2 zu der oder von der optionalen Ladeeinrichtung 40 und/oder einer sonstigen Zu- oder Abförderung von Linsen 2.

Die Bearbeitungsvorrichtung 1 weist vorzugsweise die Fördereinrichtung 50 zur Zuförderung von zu bearbeitenden Linsen 2 und/oder Wegförderung von bearbeiteten Linsen 2 auf. Die Fördereinrichtung 50 kann optional der Bearbeitungsvorrichtung 1 auch nur zugeordnet sein, also optional keinen Teil der Bearbeitungsvorrichtung 1 bilden.

Die Fördereinrichtung 50 ist besonders bevorzugt als Förderband oder Gurtförderer ausgebildet.

Die zu bearbeitenden Linsen 2 werden vorzugsweise auf oder in Transportträgern 51 zugeführt bzw. zugefördert. Besonders bevorzugt sind die Transportträger 51 als Transportkisten ausgebildet und/oder dienen jeweils der Aufnahme von zwei Linsen 2.

Vorzugsweise werden die Transportträger 51 auch zur Wegförderung von bearbeiteten Linsen 2 verwendet.

Die Fördereinrichtung 50 ist vorzugsweise an einer Seite, insbesondere einer kürzeren Seite der Bearbeitungsvorrichtung 1 angeordnet.

Die Förderrichtung bzw. Haupterstreckungsrichtung der Fördereinrichtung 50 verläuft vorzugsweise parallel zu einer Seite der Bearbeitungsvorrichtung 1 bzw. in einer X-Richtung und/oder horizontal.

Die zu bearbeitenden Linsen 2 werden vorzugsweise einzelweise mittels der Ladeeinrichtung 40 von der Fördereinrichtung 50 bzw. einem Transportträger 51 aufgenommen und an die Wechseleinrichtung 30, besonders bevorzugt unter Zwischenschaltung der optionalen Übergabeeinrichtung 60, übergeben. Alternativ kann auch eine Übergabe direkt an eine Bearbeitungsstation, wie die Frässtation 10 oder Drehstation 100, erfolgen.

Die Ladeeinrichtung 40 kann auch durch die Wechseleinrichtung 30 gebildet sein oder umgekehrt bzw. einen Teil der Wechseleinrichtung 30 bilden. Vorzugsweise ist die Ladeeinrichtung 40 jedoch als eine von der Wechseleinrichtung 30 separate Einrichtung ausgeführt.

Die Bearbeitungseinrichtung 1 bzw. Ladeeinrichtung 40 weist vorzugsweise die Übergabeeinrichtung 60 auf, die einer Übergabe einer Linse 2 an die Wechseleinrichtung 30 bzw. einer Aufnahme einer Linse 2 von der Wechseleinrichtung 30 dient.

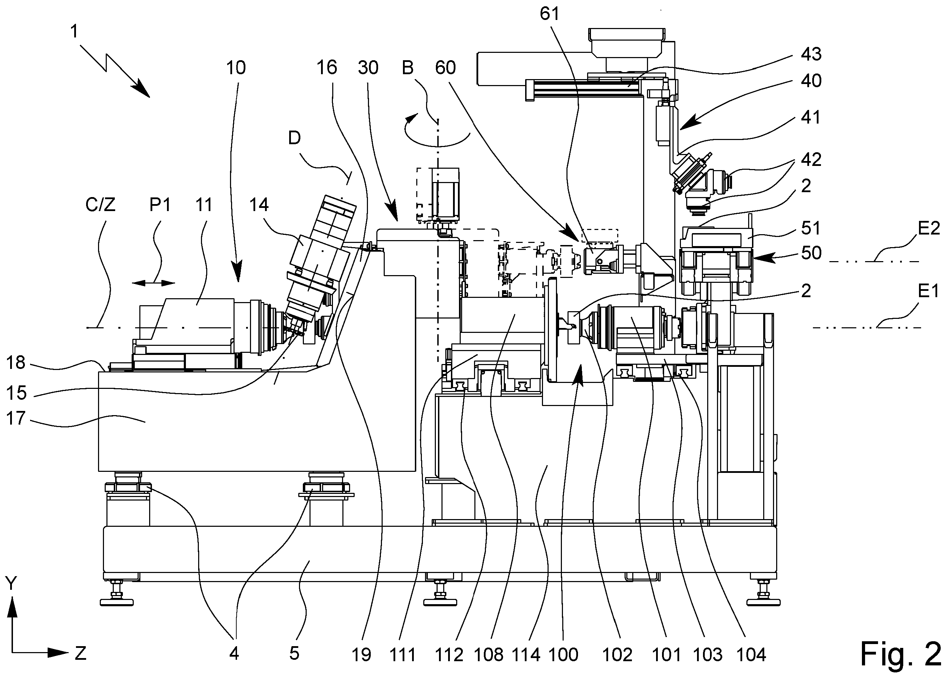

Die Übergabeeinrichtung 60 hält die Linse 2 vorzugsweise blockstückseitig und weist hierzu insbesondere ein Aufnahmefutter 61 auf, wie in der schematischen Seitenansicht gemäß Fig. 2 angedeutet.

Die Übergabeeinrichtung 60 dient alternativ oder zusätzlich vorzugsweise einem Umgreifen, sodass die Linse 2 beim weiteren Handhaben jeweils von der nicht-geblockten bzw. freien Flachseite gegriffen bzw. gehalten werden kann.

Beim Darstellungsbeispiel weist die Ladeeinrichtung 40 vorzugsweise einen Manipulator 41 mit mindestens einem Greiforgan bzw. Sauger 42, besonders bevorzugt zwei Greiforgangen bzw. Saugern 42 auf, wie insbesondere in der schematischen Seitenansicht gemäß Fig. 2 angedeutet.

Besonders bevorzugt sind die beiden Greiforgane bzw. Sauger 42 zueinander gewinkelt bzw. voneinander wegweisend am Manipulator 41 gehalten und derart verdrehbar bzw. verkippbar, dass wahlweise ein Greiforgan bzw. Sauger 42 in die Richtung zur Aufnahme oder Abgabe einer Linse 2 - hier nach unten bzw. zur Aufnahme von der oder Abgabe an die Fördereinrichtung 50 bzw. Übergabeeinrichtung 60 - weist.

Die Ladeeinrichtung 40 bzw. der Manipulator 41 ist vorzugsweise vertikal in Richtung einer Y-Achse und horizontal in Richtung einer Z-Achse (quer bzw. senkrecht zur X-Achse) und optional auch horizontal in Richtung der hier senkrecht zur Zeichenebene von Fig. 2 verlaufenden X-Achse bewegbar, insbesondere mittels entsprechender Schlittenführungen 43, Teleskopzylinder oder dergleichen.

Die Ladeeinrichtung 40 bzw. der Manipulator 41 kann mit dem Greiforgan/ Sauger 42 die Linse 2 von oben bzw. auf der nicht geblockten Seite halten und die Linse 2 - vorzugsweise ohne Änderung ihrer Ausrichtung - an die Übergabeeinrichtung 60 übergeben, wie in Fig. 2 gestrichelt angedeutet.

Wenn die Übergabeeinrichtung 60 bereits eine bearbeitete Linse 2 hält, kann die Übergabeeinrichtung 60 bzw. der Manipulator 41 mit dem nicht belegten Greiforgan bzw. Sauger 42 zunächst diese bearbeitete Linse 2 von der Übergabeeinrichtung 60 aufnehmen und dann mittels des anderen Greiforgans bzw. Saugers 42 die zuvor der Fördereinrichtung 50 bzw. einem Transportträger 51 entnommene, noch unbearbeitete Linse 2 an die Übergabeeinrichtung 60 übergeben.

Zur Übergabe der noch unbearbeiteten Linse 2 an die Wechseleinrichtung 30 wird die Übergabeeinrichtung 60 bzw. deren Aufnahmefutter 61 vorzugsweise derart bewegt bzw. verkippt, dass die Linse 2 aus der mit ihrer Flachseite nach oben weisenden bzw. horizontalen Ausrichtung in eine vertikale Ausrichtung bewegt bzw. verkippt wird, in der die zentrale Linsenachse horizontal bzw. insbesondere in die Z-Richtung verläuft und/oder in der die nicht geblockte Flachseite in der Darstellung gemäß Fig. 2 vorzugsweise nach links und/oder zur Frässtation 10 bzw. deren Werkstückspindel 11 weist.

Die Wechseleinrichtung 30 übernimmt dann die zu bearbeitende Linse 2 von der Ladeeinrichtung 40 bzw. Übergabeeinrichtung 60. Hierzu erfasst die Wechseleinrichtung 30 die Linse 2 insbesondere an ihrer nicht geblockten bzw. zu bearbeitenden Flachseite oder gegebenenfalls auch umfangsseitig. Gestrichelt ist in Fig. 1 angedeutet, wie die Wechseleinrichtung 30 die noch unbearbeitete Linse 2 von der Übergabeeinrichtung 60 übernimmt.

Die Wechseleinrichtung 30 übergibt die unbearbeitete Linse 2 anschließend vorzugsweise zunächst an die Frässtation 10 bzw. deren Werkstückspindel 11, wie in Fig. 1 schematisch angedeutet.

Später nach dem Fräsen ist vorzugsweise vorgesehen, dass die Wechseleinrichtung 30 die gefräste Linse 2 an die Drehstation 100 übergibt.

Weiter ist vorzugsweise vorgesehen, dass die Wechseleinrichtung 30 nach dem Drehen die fertig bearbeitete Linse 2 von der Drehstation 100 an die Ladeeinrichtung 40 bzw. Übergabeeinrichtung 60 wieder übergibt.

Nachfolgend wir zunächst ein besonders bevorzugter Aufbau der Wechseleinrichtung 30 näher erläutert.

Fig. 3 zeigt in einer schematischen perspektivischen Ansicht eine besonders bevorzugte Ausführungsform der Wechseleinrichtung 30.

Die Wechseleinrichtung 30 weist vorzugsweise einen Doppelgreifer 31 mit zwei Greiforganen bzw. Saugern 32 auf, die vorzugsweise in die gleiche Richtung weisen und/oder von einem gemeinsamen Träger 33 gehalten sind.

Fig. 3 zeigt die Wechseleinrichtung 30 bzw. den Doppelgreifer 31 mit zwei aufgenommenen Linsen 2. Die Sauger 32 halten die Linsen 2 jeweils an der ungeblockten Flachseite.

Anstelle der Sauger 32 können beispielsweise aber auch Greifer zum beispielweise umfangsseitigen Greifen der Linsen 2 als Greiforgane eingesetzt werden.

Die Linsen 2 sind vorzugsweise so gehalten, dass jeweils die geblockte Flachseite von der Wechseleinrichtung 30 abgewandt ist.

Die Wechseleinrichtung 30 weist vorzugsweise einen Arm 34 auf, der den Doppelgreifer 31 bzw. Träger 33 bzw. die Sauger 32 insbesondere an seinem freien Ende trägt und besonders bevorzugt als Rundstab bzw. Stange ausgeführt ist. Im Darstellungsbeispiel hält der Arm 34 den Träger 33 mittig bzw. zentral. Jedoch sind auch andere konstruktive Lösungen zur Halterung bzw. Manipulation des Doppelgreifers 31 bzw. der Greiforgane/ Sauger 32 möglich.

Die Wechseleinrichtung 30 bzw. der Arm 34 bzw. der Doppelgreifer 31 ist vorzugsweise um eine Schwenkachse B schwenkbar, insbesondere um einen Schwenkwinkel von 180°. Die Schwenkachse B verläuft vorzugsweise vertikal und/oder parallel zu einer Y-Richtung. Besonders bevorzugt ist die Wechseleinrichtung 30 insgesamt um diese Schwenkachse B schwenkbar. Hierzu weist die Wechseleinrichtung 30 vorzugsweise einen Schwenkantrieb 37 auf.

Insbesondere ist mindestens ein Sauger 32 bzw. der Doppelgreifer 31 vorzugsweise axial bezüglich der Schwenkachse B und/oder linear vor- und zurück bewegbar, insbesondere in horizontaler Richtung bzw. Z-Richtung. Dies gestattet insbesondere eine Übergabe bzw. Übernahme einer Linse 2.

Die Wechseleinrichtung 30 ist vorzugsweise dazu ausgebildet, die Linse 2 insbesondere von der Übergabeeinrichtung 60 aufzunehmen, insbesondere durch eine Linearbewegung, hier in Z-Richtung, wie durch Pfeil P3 angedeutet, und durch Schwenken um die Schwenkachse B an die Frässtation 10 zu übergeben, wobei bei der Abgabe vorzugweise wiederum eine Linearbewegung insbesondere in Z-Richtung erfolgt.

Vorzugsweise ist der Arm 34 bzw. Doppelgreifer 31 linear (vor und zurück) bewegbar. Die Linearbewegung verläuft vorzugsweise entlang der Richtung der Längserstreckung des Arms 34, quer bzw. senkrecht zur Schwenkachse B, horizontal und/oder parallel bzw. koaxial zu einer Zustellrichtung Z bzw. Drehachse C der Werkstückspindel 11 bzw. 101. Hierzu weist die Wechseleinrichtung 30 vorzugsweise einen Antrieb 35 auf.

Besonders bevorzugt ist der Arm 34 bzw. Doppelgreifer 31 um eine Wendeachse W drehbar, um wahlweise einen der beiden Greiforgane bzw. Sauger 32 für die Übernahme oder Übergabe einer Linse 2 einsetzen zu können. Die Wendeachse W entspricht vorzugsweise der Längsachse des Arms 34 und/oder entspricht der linearen Bewegungsachse des Arms 34 bzw. Doppelgreifers 31 und/oder verläuft in Z-Richtung, horizontal und/oder radial bezüglich der Schwenkachse B.

Besonders bevorzugt weist die Wechseleinrichtung 30 ein in Fig. 3 schematisch angedeutetes Kurvengetriebe 36 auf, um das gewünschte Drehen um die Wendeachse W zu erreichen und optional der Linearbewegung - zumindest abschnittsweise und/oder wahlweise - zu überlagern.

Besonders bevorzugt wird mittels des Kurvengetriebes 36 der Linearbewegung des Arms 34 bzw. Doppelgreifers 31 die gewünschte Drehbewegung überlagert. Versuche haben gezeigt, dass so besonders kurze Wechselzeiten erreicht werden können.

Die gewünschte Drehbewegung wird also vorzugsweise durch Drehen des Arms 34 um die Wendeachse W realisiert. Insbesondere ist der Arm 34 also sowohl axial bewegbar als auch drehbar.

Beim Darstellungsbeispiel ist ein Drehen des Doppelgreifers 31 um die Wendeachse W um 180° erforderlich, um anstelle eines Greiforgans bzw. Saugers 32 das andere Greiforgan bzw. den anderen Sauger alternativ einzusetzen. Dies ist beim Darstellungsbeispiel dadurch bedingt, dass sich der Träger 33 von der Wendeachse W bzw. dem Arm 34 radial weg in entgegengesetzte Richtungen zu den beiden Greiforganen bzw. Saugern 32 erstreckt. Jedoch sind auch andere konstruktive Lösungen möglich, sodass ein Drehen beispielsweise um 90° zum Wechseln zwischen den beiden Greiforganen bzw. Saugern 32 genügen kann.

Der gesamte Drehwinkel zum Wechseln von einem Greiforgan bzw. Sauger 32 zum anderen Greiforgan bzw. Sauger 32 - also zum Wenden - beträgt beim Darstellungsbeispiel also vorzugsweise 180°.

Zum Wenden wird beim Zurückziehen des Doppelgreifers 31 bzw. bei der Linearbewegung zur Schwenkachse B hin der Doppelgreifer 31 vorzugsweise bereits um den halben Drehwinkel - beim Darstellungsbeispiel also 90° - gedreht. Jedoch sind auch andere Drehwinkelaufteilungen, beispielsweise 2/5 und 3/5, zur Erreichung des gesamten Drehwinkels möglich.

Diese Drehbewegung wird vorzugsweise mittels des Kurvengetriebes 36 erzeugt bzw. der Linearbewegung überlagert, sodass die beiden Bewegungen insgesamt sehr schnell ausgeführt werden können. Jedoch ist es grundsätzlich auch möglich, beim Zurückziehen die Drehbewegung erst nach der Linearbewegung auszuführen.

Nachfolgend wird ein bevorzugter Ablauf des Linsenwechsels erläutert.

Nach der Aufnahme der unbearbeiteten Linse 2 (beim Darstellungsbeispiel vorzugsweise mit dem oberen Greiforgan bzw. Sauger 32, insbesondere an der zu bearbeitenden Seite) von der Übergabeeinrichtung 60 wird der Doppelgreifer 31 bzw. Arm 34 axial zurückgezogen bzw. in Richtung der Schwenkachse B linear bewegt und damit von der Übergabeeinrichtung 60 bzw. deren Aufnahmefutter 61 gelöst.

Anschließend wird die Wechseleinrichtung 30 bzw. der Doppelgreifer 31 bzw. der Arm 34 und damit die aufgenommene Linse 2 zu der Frässtation 10 - beim Darstellungsbeispiel um 180° - um die B-Achse geschwenkt.

Zunächst wird dann durch lineares Bewegen des Doppelgreifers 31 entlang der Linearachse Z mit dem freien Greiforgan bzw. Greifer 32 (beim Darstellungsbeispiel dem unteren Greiforgan bzw. Greifer 32) eine von der Frässtation 10 bereits fertig bearbeitete Linse 2 gegriffen bzw. angesaugt, insbesondere an der von der Frässtation bearbeiteten Seite. Anschließend wird der Doppelgreifer 31 wieder linear zurückgezogen bzw. in Richtung der Schwenkachse B zurückbewegt, um die erfasste Linse 2 von der Frässtation 10 (genauer gesagt von der Werkstückspindel 11 bzw. deren Spannfutter 12 der Frässtation 10) zu lösen.

Dieser linearen Rückbewegung wird vorzugsweise eine (erste) Drehbewegung, insbesondere über einen ersten Teilwinkel bzw. den halben Drehwinkel, überlagert, um die Drehbewegung möglichst schnell auszuführen. Beim anschließenden axialen Vorbewegen zur Frässtation 10 bzw. Werkstückspindel 11 hin erfolgt eine weitere (zweite) Drehung in die gleiche Drehrichtung, vorzugsweise wieder um den halben Drehwinkel bzw. um einen zweiten Teilwinkel (Restwinkel) zur Erreichung des gesamten Drehwinkels, sodass die unbearbeitete Linse 2 vor die Werkstückspindel 11 bewegt bzw. gedreht wird und schließlich durch die abschließende Linearbewegung mit dem Spannfutter 12 gekoppelt bzw. an die Frässtation 10 bzw. Werkstückspindel 11 übergeben wird.

Zum Lösen der Linse 2 von dem Spannfutter 12 setzt die Drehbewegung beim Zurückziehen vorzugsweise erst nach einer gewissen Strecke rein linearer Bewegung ein und wird beim Ausfahren des Arms 34 bzw. Doppelgreifers 31 die Drehbewegung bereits vor dem Ende der Linearbewegung beendet, um ein vorzugsweise lineares Koppeln der Linse 2 mit dem Spannfutter 12 zu ermöglichen.

Vorzugsweise ist die Linearbewegung zum Ausgleich unterschiedlicher Dicken bzw. Geometrien der Linsen 2 anpassbar und/oder die Wechseleinrichtung 30 mit einer in axialer Richtung bzw. Richtung der Wendeachse W wirkenden Federung (beispielsweise des Arms 34 oder der Greiforgane bzw. Sauger 32) ausgestattet.

Die optional vorgesehene Federung in axialer Richtung bzw. Richtung der Übergabe oder Aufnahme einer Linse 2 bzw. des Arms 34 oder des jeweiligen Greiforgans oder Saugers 32 bzw. 42 oder Aufnahmefutters 61 ist besonders bevorzugt. So können nämlich besonders bevorzugt Linsen 2 mit unterschiedlichen Linsendicken bzw. Linsengeometrien sicher übergeben bzw. erfasst werden, ohne die Zustellung entsprechend variieren zu müssen.

Nach der Übergabe der zu bearbeitenden Linse 2 an die Frässtation 10 wird der Arm 34 wieder linear zurückgezogen, vorzugsweise mit Drehen des Doppelgreifers 31. Dann wird die Wechseleinrichtung 30 wieder zu der Übergabeeinrichtung 60 bzw. zur Drehstation 100 um die Schwenkachse B geschwenkt.

Im Hinblick auf einen schnellen Linsenwechsel und Bewegungsablauf liegen die Übergabeeinrichtung 60 und die Wechselposition der Drehstation 100 bzw. Werkstückspindel 101 vorzugsweise in der gleichen Schwenklage bezüglich der Schwenkachse B, besonders bevorzugt axial versetzt in Richtung der Schwenkachse B bzw. in vertikaler Richtung Y übereinander. Aus Vereinfachungsgründen ist die Werkstückspindel 101 in Fig. 1 in einer Arbeitsposition vor einem Fast-Tool-Antrieb und nicht in ihrer Wechselposition - hier unter der Übergabeeinrichtung 60 - dargestellt.

Nach dem Schwenken zu der Drehstation 100 / Übergabeeinrichtung 60 wird der Arm 34 bzw. Doppelgreifer 31 wieder linear ausgefahren und dabei vorzugsweise weitergedreht, um dann vorzugsweise zunächst von der Drehstation 100 bzw. deren Werkstückspindel 101 eine fertig bearbeitete Linse 2 mit dem freien - beim Darstellungsbeispiel jetzt unten liegenden - Greiforgan bzw. Sauger 32 aufzunehmen, insbesondere an der von der Drehstation 100 bearbeiteten Seite. Dabei ist das Aufnahmefutter 61 der Übergabeeinrichtung 60 vorzugsweise weggeschwenkt, da die nur gefräste Linse 2 am anderen (oben liegenden) Sauger 32 nicht an die Übergabeeinrichtung 60, sondern später im nächsten Schritt an die Drehstation 100 hierbei abgegeben wird.

Als nächstes wird der Doppelgreifer 31 wieder linear zurückgezogen und wird nach der anfänglich rein linearen Bewegung die Drehbewegung wieder vorzugsweise der Rückbewegung überlagert, um den Doppelgreifer 31 insbesondere um den halben Drehwinkel bzw. 90° beim Zurückziehen um die Wendeachse W zu drehen. Anschließend wird der Arm 34 mit dem Doppelgreifer 31 wieder linear ausgefahren und um den halben Drehwinkel weitergedreht, sodass schließlich die zuvor von der Frässtation 10 übernommene, gefräste Linse 2 insbesondere unten liegt und an die Drehstation 100 bzw. deren Werkstückspindel 101 bzw. deren Spannfutter 102 übergeben wird, wobei insbesondere die gefräste Seite von der Werkstückspindel 101 bzw. deren Spannfutter 102 abgewandt ist.

So kann ein besonders schneller Linsenwechsel bei der Drehstation 100 bzw. deren Werkstückspindel 101 erreicht werden. Dies ist einem hohen Durchsatz zuträglich, da zumeist die spanende Bearbeitung in der Drehstation 100 die längste Zeit bei der Bearbeitung in Anspruch nimmt, also länger als die fräsende Bearbeitung in der Frässtation 10 dauert.

Besonders bevorzugt wird gleichzeitig mit der Übergabe der gefrästen Linse 2 an die Drehstation 100 bzw. die Werkstückspindel 101 auch die fertig bearbeitete Linse 2 übergeben, besonders bevorzugt an die Übergabeeinrichtung 60. Dies wird insbesondere durch den Einsatz des Doppelgreifers 31 bzw. durch in die gleiche Richtung ausgerichtete Greiforgane/Sauger 32 erleichtert oder ermöglicht. So kann auch ein zeitlich optimierter Ablauf erreicht werden.

Jedoch ist es grundsätzlich auch möglich, dass die fertig bearbeitete Linse 2 erst nach der Übergabe der gefrästen Linse 2 an die Drehstation 100 von der Wechseleinrichtung 30 bzw. deren Doppelgreifer 31 in einem separaten Schritt abgegeben bzw. übergeben wird.

Die Linse 2 ist beim Darstellungsbeispiel vorzugsweise dann fertig bearbeitet, wenn ihre zu bearbeitende Flachseite abgedreht bzw. auf der zu bearbeitenden Flachseite eine gewünschte Flächenform (Rezeptfläche) durch spanende Bearbeitung erzeugt wurde. Entsprechendes gilt natürlich, wenn beide Flachseiten einer Linse 2 bearbeitet werden.

Nach der Abgabe der fertig bearbeiteten Linse 2 - beim Darstellungsbeispiel an die Übergabeeinrichtung 60 - wird der Doppelgreifer 31 bzw. Arm 34 vorzugsweise wieder linear zurückgezogen, wobei hierbei ein Drehen oder Wenden des Arms 34 bzw. Doppelgreifers 31 nicht erforderlich ist, zumal der Doppelgreifer 31 in diesem Fall vorzugsweise mit keiner Linse 2 belegt ist.

Anschließend kann das Aufnahmefutter 61 bzw. die Linse 2 von der Übergabeeinrichtung 60 - beim Darstellungsbeispiel nach oben - geschwenkt bzw. gekippt werden.

Die Ladeeinrichtung 40 übernimmt dann die fertig bearbeitete Linse 2 von der Übergabeeinrichtung 60 und übergibt diese wieder an die Fördereinrichtung 50 bzw. legt diese wieder in einen Transportträger 51, insbesondere in denselben Transportträger 51, dem sie ursprünglich entnommen worden ist, ab.

Schließlich wird mittels der Ladeeinrichtung 40 eine neue zu bearbeitende Linse 2 an die Übergabeeinrichtung 60 übergeben und der Kreislauf bzw. Ablauf kann entsprechend fortgesetzt werden bzw. wieder beginnen, indem die Wechseleinrichtung 30 bzw. der Doppelgreifer 31 die zu bearbeitende Linse 2 von der Übergabeeinrichtung 60 übernimmt und dann zu der Frässtation 10 schwenkt.

Nachfolgend wird ein bevorzugter Aufbau der Frässtation 10 näher erläutert.

Die Werkstückspindel 11 weist vorzugsweise nur eine (lineare) Bewegungsachse, hier in Zustellrichtung bzw. die Zustellachse Z, auf und/oder ist vorzugsweise auf einem (ersten) Schlitten 13 angeordnet und insbesondere nur in einer Richtung, hier horizontal bzw. in Z-Richtung bzw. längs der Drehachse C der Werkstückspindel 11, wie durch Pfeil P1 angedeutet, linear vor- und zurückbewegbar.

Die Frässtation 10 weist vorzugsweise einen Fräsantrieb 14 mit einem in Fig. 1 schematisch angedeuteten Fräswerkzeug 15 zur spanabhebenden bzw. fräsenden Bearbeitung der Linse 2 auf.

Der Fräsantrieb 14 weist vorzugsweise nur eine lineare Bewegungsachse X auf und/oder ist vorzugsweise auf einem (zweiten) Schlitten 16 angeordnet und vorzugsweise nur quer bzw. senkrecht zu der Werkstückspindel 11 bzw. deren Bewegungsachse Z und/oder Drehachse C, hier in X-Richtung, wie durch Pfeil P2 angedeutet, hin- und herbewegbar, insbesondere so dass der Fräsantrieb 14 mit seinem Fräswerkzeug 15 zur Bearbeitung der Linse 2 vor die Werkstückspindel 11 bzw. dessen Spannfutter 12 bewegbar ist.

Vorzugsweise weist die Frässtation 10 also nur zwei einzelne bzw. unabhängige (lineare) Bewegungsachsen auf, wobei insbesondere die eine Bewegungsachse Z der Werkstückspindel 11 und die andere Bewegungsachse X dem Fräsantrieb 14 bzw. Fräswerkzeug 15 zugeordnet ist. Besonders bevorzugt weist die Frässtation 10 keine gestapelten (linearen) Bewegungsachsen auf.

Berücksichtigt man auch die Drehachsen C und D der Werkstückspindel 11 und des Fräsantriebs 14, weisen die Werkstückspindel 11 und/oder der Fräsantrieb 14 jeweils vorzugsweise genau zwei Achsen, nämlich jeweils eine Linearbewegungs- und eine Drehachse, auf.

Optional kann der Fräsantrieb 14 auch eine zusätzliche Bewegungsachse, beispielsweise längs der Drehachse D und/oder eine Kippachse aufweisen. Im Falle einer zusätzlichen linearen Bewegungsachse sind die beiden linearen Bewegungsachsen des Fräsantriebs 14 vorzugsweise gestapelt. Drei gestapelte lineare Bewegungsachsen sind vorzugsweise nicht vorgesehen.

Die Frässtation 10 weist vorzugweise ein eigenes Maschinenbett 17 mit einer ersten, insbesondere horizontalen Lagerfläche 18 und einer zweiten, insbesondere geneigten Lagerfläche 19 auf, wie insbesondere in Fig. 2 angedeutet.

Die Werkstückspindel 11 ist mit ihrem Schlitten 13 bzw. der entsprechenden Schlittenführung 20 vorzugsweise unmittelbar auf der ersten Lagerfläche 18 des Maschinenbetts 17 angeordnet bzw. befestigt.

Der Fräsantrieb 14 ist mit seinem Schlitten 16 bzw. der entsprechenden Schlittenführung 21 vorzugsweise unmittelbar auf der zweiten Lagerfläche 19 des Maschinenbetts 17 angeordnet bzw. befestigt.

Die Werkstückspindel 11 und/oder der Fräsantrieb 14 weist bzw. weisen also vorzugsweise jeweils nur eine einzige Bewegungsachse auf. Dementsprechend ist ein sehr einfacher und verbindungssteifer Aufbau möglich.

Der Fräsantrieb 14 bzw. dessen Drehachse D, um die das Fräswerkzeug 15 rotiert, ist vorzugsweise um mehr als 45°, insbesondere mehr als 70°, beispielsweise etwa 85°, zur Drehachse C der Werkstückspindel 11 bzw. Horizontalebene X-Z geneigt.

Vorzugsweise ist die zweite Lagerfläche 19 für den Fräsantrieb 14 um mindestens 45°, insbesondere mehr als 70°, beispielsweise etwa 85°, zur Horizontalen bzw. zur Drehachse C der Werkstückspindel 11 geneigt und/oder verläuft die Drehachse D des Fräsantriebs 14 parallel zur zweiten Lagerfläche 19. Dies ist wiederrum einem sehr einfachen bzw. verbindungssteifen Aufbau zuträglich.

Der Fräsantrieb 14 ist vorzugsweise nur zur Bearbeitung der Linse 2 vor die Werkstückspindel 11 mittels des Schlittens 16 bewegbar und kann wieder in die in Fig. 1 gezeigte Ausgangsposition zurückbewegt werden, um den Linsenwechsel mittels der Wechseleinrichtung 30 zu ermöglichen.

Bei der Bewegungsachse Z der Werkstückspindel 11, der Rund- bzw. Drehachse C der Werkstückspindel 11 und der Bewegungsachse X des Fräsantriebs 14 handelt es sich insbesondere um (positions)gesteuerte Achsen bzw. CNC-Achsen.

Die Drehachse D des Fräsantriebs 14 muss hingegen keine (positionsgesteuerte) Achse bzw. Rundachse sein, auch wenn die Drehzahl vorzugsweise gesteuert oder geregelt wird und/oder anpassbar bzw. variierbar ist.

Die Frässtation 10 bzw. deren Maschinenbett 17 ist vorzugsweise über Dämpfungselemente 4 an einem bzw. auf einem Grundgestell 5 der Bearbeitungsvorrichtung 1 gelagert, wie in Fig. 2 angedeutet. Jedoch sind auch andere konstruktive Lösungen möglich.

Nachfolgend wird ein besonders bevorzugter Aufbau der vorschlagsgemäßen Drehstation 100 näher erläutert.

Die Werkstückspindel 101 der Drehstation 100 hat vorzugsweise nur eine einzige Bewegungsachse, insbesondere quer bzw. senkrecht zu ihrer Drehachse C und/oder in horizontaler Richtung, insbesondere in X-Richtung, wie durch Pfeil P4 in Fig. 1 angedeutet, auf.

Insbesondere ist die Werkstückspindel 101 auf einem Schlitten 103 angeordnet, der mittels seiner Schlittenführung 104 entsprechend in der gewünschten Querrichtung bzw. X-Richtung, insbesondere wie durch Pfeil P4 angedeutet, bewegbar oder verschiebbar ist.

Vorzugsweise ist die Werkstückspindel 101 insbesondere mittels des Schlittens 103 - hier in die Querrichtung X bzw. X-Richtung - von der Wechselposition zum Linsenwechsel in die Bearbeitungsposition vor einem Fast-Tool-Antrieb 105, 108 und umgekehrt bewegbar, wie durch Pfeil P4 angedeutet.

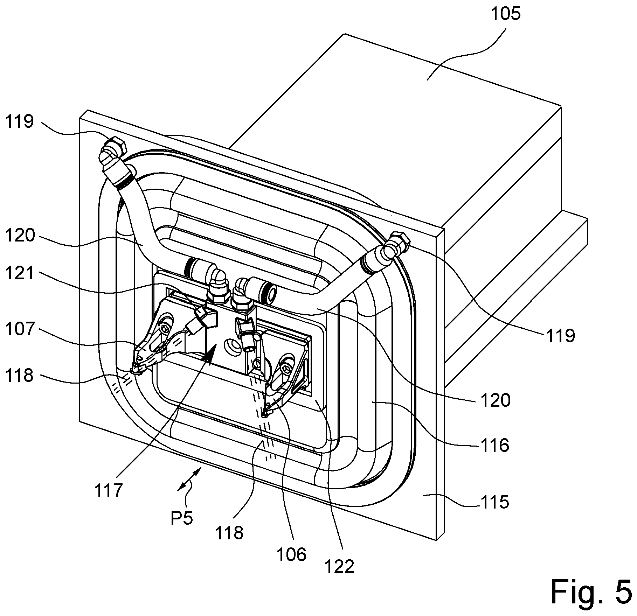

Die Drehstation 100 weist vorzugsweise einen (ersten) Fast-Tool-Antrieb 105 mit mindestens einem vorzugsweise vorspringenden Drehwerkzeug 106 auf. Beim Darstellungsbeispiel weist der Fast-Tool-Antrieb 105 optional auch ein zusätzliches bzw. zweites Drehwerkzeug 107 auf, wie in Fig. 1 und 5 angedeutet.

Mittels des Fast-Tool-Antriebs 105 kann das Drehwerkzeug 106 bzw. 107 sehr schnell vor- und zurück bewegt werden, insbesondere mit einer Beschleunigung von mehr als 1 g (≙ 9,81 m s⁻²), besonders bevorzugt mehreren g, um die sich durch die Werkstückspindel 101 drehende Linse 2 stirnseitig zu bearbeiten und durch entsprechende axiale Bewegungen des Drehwerkzeugs 106 bzw. 107 die Stirnfläche der Linse 2 in gewünschter Weise zu formen. Insbesondere kann das Drehwerkzeug 106 bzw. 107 über eine Umdrehung der Linse 2 einfach oder mehrfach vor- und zurückbewegt werden.

Die Drehstation 100 weist optional einen zusätzlichen bzw. zweiten Fast-Tool-Antrieb 108 mit mindestens einem Drehwerkzeug 109 auf.

Die Fast-Tool-Antriebe 105 und 108 dienen insbesondere einer sequenziellen Bearbeitung derselben Linse 2, um beispielsweise zunächst eine Grobbearbeitung und dann eine Feinbearbeitung zu ermöglichen.

Insbesondere sind die beiden Fast-Tool-Antriebe 105 und 108 unterschiedlich ausgebildet. Beispielsweise weist der eine eine Rollenlagerung und der andere eine Luftlagerung auf. So wird beispielsweise einerseits eine etwas schnellere und dafür weniger abtragende und andererseits eine etwas langsamere und dafür mehr abtragende Bearbeitung ermöglicht.

Die Bewegungsachse des Drehwerkzeugs bzw. der Drehwerkzeuge 106, 107, 109 verläuft vorzugsweise in Z-Richtung bzw. in Verlängerung oder parallel zu der Rundachse bzw. Drehachse C der Werkstückspindel 101 und/oder horizontal bzw. in Z-Richtung, wie durch Pfeil P5 angedeutet.

Die Werkstückspindel 101 ist in horizontaler Richtung bzw. X-Richtung quer zu dem bei der drehenden (spanabhebenden) Bearbeitung jeweils gegen überliegenden Drehwerkzeug 106, 107 bzw. 109 bewegbar, sodass das Drehwerkzeug 106, 107, 109 bei Rotation der Linse 2 grundsätzlich über die gesamte Stirnfläche bewegt werden kann. Hierbei ist es wichtig, dass das Drehwerkzeug 106, 107, 109 auch genau über die Mitte der Linse 2 bzw. durch die Drehachse C und nicht seitlich daran vorbei bewegt wird. Zur Justierung weist die Drehstation 100 daher vorzugsweise eine Höhenverstellung auf, um den mindestens einen Fast-Tool-Antrieb 105 bzw. 108 relativ zur Werkstückspindel 101 in vertikaler Richtung bzw. Y-Richtung bzw. quer zur Drehachse C und Bewegungsachse X justieren zu können.

Vorzugsweise weist die Drehstation 100 eine Keilverstellung 110 zur Höhenverstellung, also Verstellung in Y-Richtung auf.

Die Keilverstellung 110 ist vorzugsweise dem Fast-Tool-Antrieb 105 bzw. den Fast-Tool-Antrieben 105, 108 zugeordnet und/oder weist vorzugsweise eine insbesondere horizontale Bewegungskomponente parallel zur Bewegungsachse X der Werkstückspindel 101 bzw. in X-Richtung und/oder quer zur Drehachse C der Werkstückspindel 101 auf.

Die Keilverstellung 110 bzw. stärkste Neigung einer schiefen Ebene S der Keilverstellung 110 verläuft vorzugsweise in der X-Y Ebene, also senkrecht zu der Drehachse C der Werkstückspindel 101 bzw. zu der Zustellachse Z.

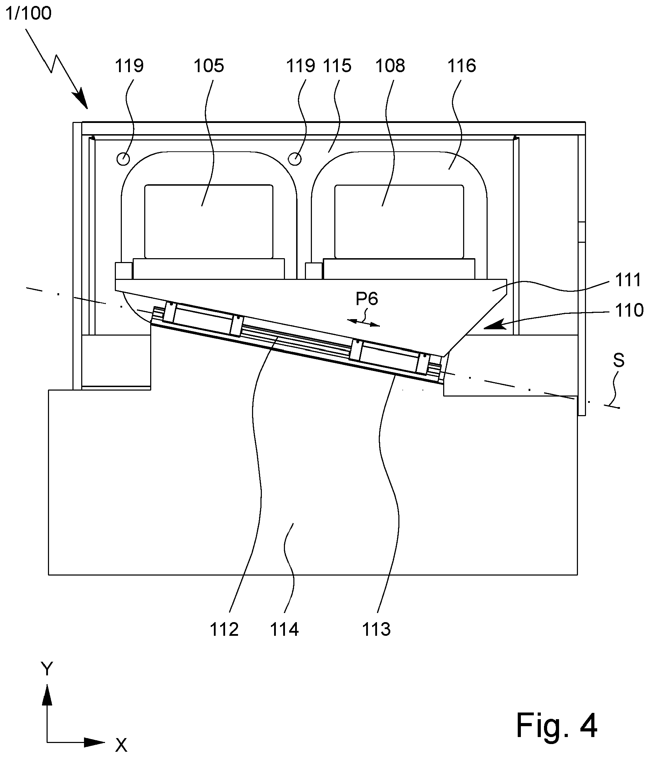

Vorzugsweise ist der mindestens eine Fast-Tool-Antrieb 105 bzw. sind die Fast-Tool-Antriebe 105, 108 auf einem (gemeinsamen) Schlitten 111 angeordnet, der über eine Schlittenführung 112 entlang der schiefen Ebene S, wie in der schematischen Seitenansicht der Drehstation 100 gemäß Fig. 4 bzw. durch Pfeil P6 angedeutet, bewegbar ist.

Bevorzugt weist der (jeweilige) Fast-Tool-Antrieb 105, 108 bzw. das (jeweilige) Drehwerkzeug 106, 107, 109 nur zwei Bewegungsachsen auf bzw. ist nur in zwei Richtungen bewegbar, insbesondere in Z-Richtung und in Richtung der schiefen Ebene S.

Folglich weist der (jeweilige) Fast-Tool-Antrieb 105, 108 bzw. das (jeweilige) Drehwerkzeug 106, 107, 109 vorzugsweise nur maximal zwei gestapelte Bewegungsachsen auf.

Da die Werkstückspindel 101 vorzugsweise nur eine Linearbewegungsachse (und eine Drehachse C) aufweist, weist die Drehstation 100 somit vorzugsweise nur maximal zwei gestapelte Bewegungsachsen auf. Eine Einrichtung bzw. eine Spindel bzw. ein Antrieb mit drei oder mehr gestapelten Bewegungsachsen ist vorzugsweise nicht vorgesehen.

Die Schlittenführung 112 der Keilverstellung 110 bzw. des Schlittens 111 ist vorzugsweise auf einer entsprechend geneigten Lagerfläche 113 eines Maschinenbetts 114 der Drehstation 100 angeordnet bzw. befestigt.

Die Lagerfläche 113 bzw. schiefe Ebene S ist vorzugsweise in X-Richtung am stärksten bzw. zur Horizontalen, insbesondere um etwa 5° bis 15°, besonders bevorzugt etwa 10° bis 12°, geneigt.

Das Maschinenbett 114 der Drehstation 100 ist vorzugsweise unabhängig bzw. getrennt von dem Maschinenbett 17 der Frässtation 10 und/oder vorzugweise entsprechend über nicht dargestellte Dämpfungselemente 4 am insbesondere gemeinsamen Grundgestell 5 abgestützt. Jedoch sind auch andere konstruktive Lösungen möglich.

Vorzugsweise ist der Arbeitsraum der Drehstation 100 zumindest weitestgehend abgeschirmt, abgedeckt und/oder abtrennbar bzw. schließbar, wobei entsprechende Abdeckungen, Trennwände oder dergleichen aus Vereinfachungsgründen weitestgehend weggelassen sind. In Fig. 5 ist ein Trennwandabschnitt 115 angedeutet, der sich bei der Verschiebung des Schlittens 111 der Keilverstellung 110 entsprechend mitbewegen sollte und beispielsweise in der Art einer Jalousie ausgeführt sein kann.

Außerdem ist dem Fast-Tool-Antrieb 105 bzw. 108 jeweils vorzugsweise ein balgartiger Abtrennabschnitt 116 zugeordnet, wie in Fig. 5 schematisch angedeutet, der die Vor- und Zurückbewegung eines Kopfs 122 des Fast-Tool-Antriebs 105 bzw. 108 mit dem jeweiligen Drehwerkzeug, wie durch Pfeil P5 in Fig. 1 und 5 angedeutet, ermöglicht.

Fig. 5 zeigt beispielhaft in einer schematischen Perspektive den (ersten) Fast-Tool-Antrieb 105 mit insbesondere beiden Drehwerkzeugen 106 und 107 aus der Sicht des Arbeitsraums.

Der Fast-Tool-Antrieb 105 weist vorzugsweise eine Kühleinrichtung 117 auf, um das mindestens eine Drehwerkzeug 106 bzw. 107 durch Zufuhr einer Kühlflüssigkeit 118 kühlen zu können. Insbesondere wird die Kühlflüssigkeit 118 in Form eines Strahls auf das jeweilige Drehwerkzeug 106 bzw. 107 gerichtet, wie in Fig. 5 schematisch angedeutet.

Die Kühleinrichtung 117 weist beim Darstellungsbeispiel vorzugsweise mindestens eine Kühlmittelzufuhr über einen Durchlass 119 (vorzugsweise aus dem Arbeitsraum und/oder durch den Trennwandabschnitt 115 bzw. Abtrennabschnitt 116) und/oder einen Schlauch 120 (im Arbeitsraum) und/oder mindestens eine Abgabeöffnung oder Düse 121, die den Kühlmittelstrahl auf das jeweilige Drehwerkzeug 106 bzw. 107 richtet, auf.

Die Kühleinrichtung 117 bzw. deren Abgabedüse 121 ist vorzugsweise fest am bewegbaren Kopf 122 des Fast-Tool-Antriebs 105 mit dem Drehwerkzeug 106 bzw. 107 angeordnet bzw. befestigt.

Bei zwei Drehwerkzeugen 106 und 107 ist die Kühleinrichtung 117 vorzugsweise dazwischen angeordnet bzw. befestigt.

Bei zwei Drehwerkzeugen 106 und 107 weist die Kühleinrichtung 117 vorzugsweise zwei Abgabeöffnungen bzw. Düsen 121 und besonders bevorzugt ebenfalls zwei separate Kühlmittelzuführungen, insbesondere jeweils mit einem separaten Durchlass 119 und/oder Schlauch 120, auf, um die beiden Drehwerkzeuge 106 und 107 unabhängig voneinander je nach Bedarf kühlen zu können.

Das Maschinenbett 114 der Drehstation 100 bildet vorzugsweise auch eine horizontale Lagerfläche 123 für die Schlittenführung 104 der Werkstückspindel 101, wie in Fig. 1 angedeutet.

Die mit der zu bearbeitenden Linse 2 bestückte Werkstückspindel 101 kann insbesondere wahlweise vor einen der beiden Fast-Tool-Antriebe 105 bzw. 108 und/oder wahlweise vor einen der Drehwerkzeuge 106, 107 bzw. 109 positioniert werden, insbesondere durch Bewegung des Schlittens 103 entlang der Schlittenführung 104 bzw. in X-Richtung oder entsprechend Pfeil P4. Die Stirnbearbeitung bzw. das Stirndrehen erfolgt dann durch entsprechendes axiales Vor- und Zurückbewegen des jeweiligen Drehwerkzeugs 106, 107 bzw. 109, wie durch Pfeil P5 in Fig. 1 angedeutet bzw. in Richtung der Zustellachse Z.

Sofern der Hub für diese hochdynamische Bewegung zu gering ist, also ergänzend das Drehwerkzeug zu der zu bearbeitenden Linse 2 zugestellt werden muss, beispielsweise zum Ausgleich unterschiedlicher Linsendicken, kann eine solche Zustellung optional durch eine in den jeweiligen Fast-Tool-Antrieb 105 bzw. 108 integrierte Zustellung erfolgen. Jedoch sind auch andere konstruktive Lösungen möglich, beispielsweise durch eine zusätzliche werkzeug- oder werkstückseitige Schlittenführung.

Nach der Drehbearbeitung der Linse 2 wird die Werkstückspindel 101 in die Wechselposition (in Fig. 1 nach links) bzw. neben die Fast-Tool-Antriebe 105, 108 und/oder unter die Übergabeeinrichtung 60 bewegt.

Insbesondere ist das Spannfutter 102 der Werkstückspindel 101 in der Wechselposition und das Aufnahmefutter 61 der Übergabeeinrichtung 60 in der horizontalen Kipplage so positioniert, dass deren X-Positionen und optional bzw. zumindest im Wesentlichen auch deren Z-Positionen übereinstimmen, um das gewünschte gleichzeitige Übergeben von zwei Linsen 2 mittels des Doppelgreifers 31 und/oder das gleichzeitige Aufnehmen von zwei Linsen 2 mittels des Doppelgreifers 31 zu ermöglichen. Optional verfügt nämlich die Übergabeeinrichtung 60 über einen Federhub zum Ausgleichen unterschiedlicher Linsendicken bzw. Z-Positionen.

Die Bearbeitungsrichtung Z bzw. P5 des Fast-Tool-Antriebs 105 bzw. der Fast-Tool-Antriebe 105, 108 verläuft vorzugsweise horizontal bzw. parallel zu der Drehachse C der Werkstückspindel 101.

Die vorschlagsgemäße Bearbeitungsvorrichtung 1 bzw. bevorzugte Verwendung führt darüber hinaus insbesondere zu folgenden Vorteilen:
Die Werkstückspindel 11 der Frässtation 10 bildet eine erste Werkstückspindel der Bearbeitungsvorrichtung 1 und die Werkstückspindel 101 der Drehstation 100 bildet eine zweite Werkstückspindel der Bearbeitungsvorrichtung 1.

Die beiden Werkstückspindeln 11, 101 weisen vorzugsweise parallele bzw. koaxiale Drehachsen C auf, sind aber vorzugsweise nur quer bzw. senkrecht zueinander bewegbar.

Gemäß einem Aspekt der vorliegenden Erfindung weisen die beiden Werkstückspindeln 11, 101 bzw. deren Spannfutter 12, 102 zueinander, insbesondere verlaufen ihre Drehachsen C vorzugsweise koaxial bzw. in Verlängerung (zumindest wenn sich die Werkstückspindel 101 der Drehstation 100 in der Wechselposition befindet). Die Wechseleinrichtung 30 ist vorzugsweise dazwischen angeordnet bzw. gelagert. Dies ist einem kompakten Aufbau zuträglich, wobei ein Linsenwechsel insbesondere durch eine Schwenkbewegung, hier um die Schwenkachse B, sehr schnell erfolgen kann.

Insbesondere ist die Wechseleinrichtung 30 bzw. deren Schwenkachse B zwischen den beiden Maschinenbetten 17 und 114 angeordnet bzw. gelagert.

Die Schwenkachse B ist vorzugsweise ortsfest.

Vorzugsweise sind ausgehend von der Fördereinrichtung 50 die Drehstation 100, die Wechseleinrichtung 30 und die Frässtation 10 zumindest im Wesentlichen hintereinander angeordnet, und zwar vorzugsweise quer zu der Förderrichtung X der Fördereinrichtung 50. Dies ist einem besonders kompakten Aufbau der Bearbeitungsvorrichtung 1 in der Förderrichtung X zuträglich.

Die Drehbearbeitung und die Fräsbearbeitung erfolgt vorzugsweise in einer ersten (horizontalen) Ebene E1 und die Linsenübergabe der Übergabeeinrichtung 60 bzw. Ladeeinrichtung 40 außerhalb bzw. in einer anderen, insbesondere darüberliegenden, (horizontalen) Ebene E2, wie in Fig. 2 schematisch angedeutet.

Die Bearbeitungsvorrichtung 1 bzw. Drehstation 100 weist vorzugsweise eine in Fig. 1 gezeigte Löseeinrichtung 124 mit einem Aktuator 125 auf, um das Spannfutter 102 der Werkstückspindel 101 in der Wechselposition öffnen und schließen zu können, um das Wechseln der Linse 2 zu ermöglichen.

Besonders bevorzugt ist die Löseeinrichtung 124 als separate Einrichtung ausgebildet, die nicht zusammen mit der Werkstückspindel 101 bewegt werden muss, sondern stationär angeordnet ist.

Die Löseeinrichtung 124 kann alternativ auch zusammen mit der Werkstückspindel 101 bewegbar bzw. in diese integriert sein.

Die Löseeinrichtung 124 kann optional auch unabhängig bewegbar sein.

Eine zusätzliche Löseeinrichtung kann auch bedarfsweise an einer anderen Position verbaut sein, um beispielsweise einen Linsenwechsel unabhängig von der Wechseleinrichtung 30 bzw. ggf. auch manuell zu ermöglichen. Beispielsweise kann die Löseeinrichtung 124 dem automatischen Wechsel, insbesondere in der Wechselposition der Werkstückspindel 101 wie beschrieben, dienen und zusätzlich einen manuellen Wechsel an einer anderen Position der Werkstückspindel 101 ermöglichen.

Die Löseeinrichtung 124 kann mit dem Aktuator 125 insbesondere axial auf die Werkstückspindel 101, beim Darstellungsbeispiel auf der dem Spannfutter 102 abgewandten Seite, zum Öffnen des Spannfutters 102 bzw. einer darin wirkenden Federzange einwirken, um so ein gewünschtes Öffnen und Schließen des Spannfutters 102 in der Wechselposition zu ermöglichen.

Die Bearbeitungseinrichtung 1 gestattet insbesondere eine Durchsatzsteigerung in Folge der bevorzugten Parallelisierung von Fräsen und Drehen.

Vorzugsweise wird die Werkstückwechselzeit reduziert, insbesondere aufgrund der bevorzugten Verwendung der Wechseleinrichtung 30, besonders bevorzugt mit dem linear bewegbaren und um die Linearachse auch drehbaren Doppelgreifer 31, und/oder aufgrund der Anordnung der ortsfesten Schwenkachse B zwischen den Bearbeitungsstationen, hier der Frässtation 10 und der Drehstation 100, und/oder zwischen den Werkstückspindeln 11, 101 bzw. deren Spannfuttern 12, 102.

Durch den Verzicht von Kreuzschlittenaufbauten wird eine größere Steifigkeit erreicht, die insbesondere der Präzision bei der Bearbeitung zuträglich ist bzw. höhere Bearbeitungsgeschwindigkeiten gestattet.

Der Einsatz von zwei Drehwerkzeugen 106, 107 an einem Fast-Tool-Antrieb 105 gestattet eine mehrstufige Bearbeitung und/oder eine Redundanz und damit eine besonders hohe Produktion bzw. einen hohen dauerhaften Durchsatz. Entsprechendes gilt bei Einsatz von zwei Fast-Tool-Antrieben 105.

Es ist anzumerken, dass die Frässtation 10 ebenso wie die Drehstation 100 vorzugsweise einen weitgehend abgekapselten Arbeitsraum für die Bearbeitung aufweist, wobei die entsprechenden Abtrennungen, Abdeckungen, Schleusen oder dergleichen aus Vereinfachungsgründen vorliegend nicht beschrieben und nicht dargestellt sind.

Vorzugsweise wird der Arbeitsraum bzw. werden Teile, wie Bleche, des Arbeitsraums der Frässtation 10 bzw. Drehstation 100 schwingungstechnisch entkoppelt mit dem jeweiligen Maschinenbett 17 bzw. 114 verbunden. Beispielsweise können Schutzbleche mittels Dämpfungselementen vom jeweiligen Arbeitsraum bzw. Fast-Tool-Antrieb 105 oder einem sonstigen Bearbeitungsantrieb, wie dem Fräsantrieb 14, entkoppelt werden.

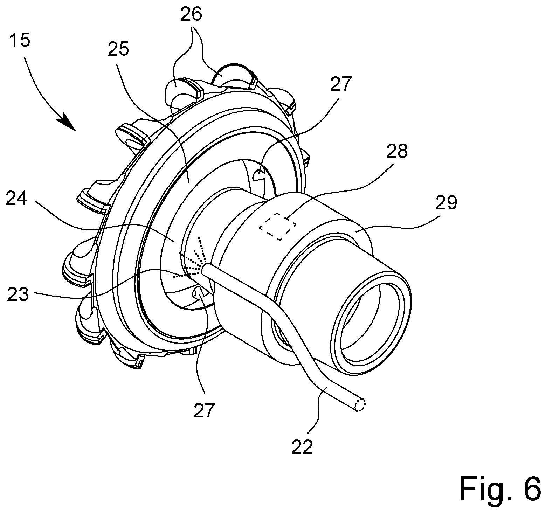

Vorzugsweise ist die Frässtation 10 bzw. der Fräsantrieb 14 optional auch mit einer Kühleinrichtung 22 zur Zuführung einer Kühlflüssigkeit 23 versehen bzw. die Kühleinrichtung 22 dem Fräswerkzeug 15 zugeordnet, wie schematisch in Fig. 6 angedeutet.

Fig.6 zeigt in einer schematischen, perspektivischen Ansicht von hinten das Fräswerkzeug 15, das bzw. dessen Fräskopf 25 besonders bevorzugt mit einer rückseitigen, insbesondere ringförmigen, nutförmigen oder ringnutförmigen Vertiefung oder Aufnahme 24 für die Kühlflüssigkeit 23 versehen ist und/oder ein oder mehrere Durchgangslöcher 27 zur Abgabe der Kühlflüssigkeit 23 von der Rückseite an die Vorderseite bzw. an Fräszähne 26 des Fräswerkzeugs 15 / Fräskopfs 25 aufweist.

Vorzugsweise ist in jedem Fräszahn 26 ein Durchgangsloch 27 zur Zuführung von Kühlflüssigkeit 23 zugeordnet.

Vorzugsweise erstrecken sich die Durchgangslöcher 27 von der Rückseite zur Vorderseite des Fräswerkzeugs 15 /Fräskopfs 25 radial nach außen, so dass die Kühlflüssigkeit 23 durch Zentrifugalkräfte auf die Vorderseite bzw. zu den Fräszähnen 26 gefördert wird.

Das Fräswerkzeug 15 ist vorzugsweise mit einem Erkennungsmittel 28, insbesondere einem optischen Zeichen oder Code oder einem RFID-Chip, besonders bevorzugt am Fräskopf 25 oder einem Schaft 29 des Fräswerkzeugs 15 versehen.

Insbesondere ist die Kühleinrichtung 22 bzw. die Zuführung von Kühlmittel 23 in Abhängigkeit davon steuerbar, ob das Fräswerkzeug 15 für die Flüssigkeitskühlung ausgelegt ist. Dies kann beispielsweise davon abhängen, ob das Erkennungsmittel 28 erkannt wird bzw. welche Informationen vom Erkennungsmittel 28, beispielsweise über Anzahl der Durchgangslöcher, eine Werkzeugidentifikation, Zähnezahl, etc., bereitgestellt werden.

Insbesondere ist die Kühleinrichtung 22 bzw. die Zuführung von Kühlmittel 23 in Abhängigkeit davon steuerbar, ob das Fräswerkzeug 15 für die Flüssigkeitskühlung ausgelegt ist. Dies kann beispielsweise davon abhängen, ob das Erkennungsmittel 28 erkannt wird bzw. welche Informationen vom Erkennungsmittel 28, beispielsweise über Anzahl der Durchgangslöcher, eine Werkzeugidentifikation, Zähnezahl, etc., bereitgestellt werden.

### Bezugszeichenliste:

- 1: Bearbeitungsvorrichtung
- 2: Linse
- 3: Blockstück
- 4: Dämpfungselement
- 5: Grundgestell

- 10: Frässtation
- 11: Werkstückspindel
- 12: Spannfutter
- 13: Schlitten
- 14: Fräsantrieb
- 15: Fräswerkzeug
- 16: Schlitten
- 17: Maschinenbett
- 18: erste Lagerfläche
- 19: zweite Lagerfläche
- 20: Schlittenführung
- 21: Schlittenführung
- 22: Kühleinrichtung
- 23: Kühlflüssigkeit
- 24: Aufnahme
- 25: Fräskopf
- 26: Fräszahn
- 27: Durchgangsloch
- 28: Erkennungsmittel
- 29: Schaft

- 30: Wechseleinrichtung
- 31: Doppelgreifer
- 32: Greiforgan/ Sauger
- 33: Träger
- 34: Arm
- 35: Antrieb
- 36: Kurvengetriebe
- 37: Schwenkantrieb

- 40: Ladeeinrichtung
- 41: Manipulator
- 42: Greiforgan/Sauger
- 43: Schlittenführung

- 50: Fördereinrichtung
- 51: Transportträger
- 60: Übergabeeinrichtung
- 61: Aufnahmefutter
- 100: Drehstation
- 101: Werkstückspindel
- 102: Spannfutter
- 103: Schlitten
- 104: Schlittenführung
- 105: Fast-Tool-Antrieb
- 106: Drehwerkzeug
- 107: Drehwerkzeug
- 108: Fast-Tool-Antrieb
- 109: Drehwerkzeug
- 110: Keilverstellung
- 111: Schlitten
- 112: Schlittenführung
- 113: Lagerfläche
- 114: Maschinenbett
- 115: Trennwandabschnitt
- 116: Abtrennabschnitt
- 117: Kühleinrichtung
- 118: Kühlflüssigkeit
- 119: Durchlass
- 120: Schlauch
- 121: Düse
- 122: Kopf
- 123: Lagerfläche
- 124: Löseeinrichtung
- 125: Aktuator

- B: Schwenkachse
- C: Drehachse (Werkstückspindel)
- D: Drehachse (Fräsantrieb)
- E1: Ebene
- E2.: Ebene
- P1-6: Pfeil
- S: schiefe Ebene
- W: Wendeachse
- X: Querbewegungsachse/Förderrichtung
- Y: vertikale Achse
- Z: Zustellachse

## Patentansprüche

1. Bearbeitungsvorrichtung (1) zur Bearbeitung von optischen Werkstücken, insbesondere Linsen (2),
mit einer Frässtation (10), die eine erste Werkstückspindel (11) aufweist,
mit einer Drehstation (100), die eine zweite Werkstückspindel (101) aufweist, und
mit einer Wechseleinrichtung (30) zum Wechseln der zu bearbeitenden Werkstücke von der ersten Werkstückspindel (11) zu der zweiten Werkstückspindel (101),
**dadurch gekennzeichnet,**
**dass** die Werkstückspindeln (11, 101) oder deren Spannfutter (12, 102) zueinander weisen.

2. Bearbeitungsvorrichtung nach Anspruch 1, **dadurch gekennzeichnet, dass** die erste und/oder zweite Werkstückspindel (11, 101) ausschließlich linear in nur einer Richtung verschiebbar ist bzw. sind.

3. Bearbeitungsvorrichtung nach Anspruch 1 oder 2, **dadurch gekennzeichnet, dass** die Frässtation (10) und die Drehstation (100) jeweils ein separates Maschinenbett (17, 114) aufweisen und dass die Wechseleinrichtung (30) unabhängig von und/oder zwischen den Maschinenbetten (17, 114) gelagert ist.

4. Bearbeitungsvorrichtung nach einem der voranstehenden Ansprüche, **dadurch gekennzeichnet, dass** die Wechseleinrichtung (30) eine insbesondere vertikale Schwenkachse (B) zum Wechseln zwischen der Frässtation (10) und Drehstation (100) und umgekehrt aufweist.

5. Bearbeitungsvorrichtung nach einem der voranstehenden Ansprüche, **dadurch gekennzeichnet, dass** die Wechseleinrichtung (30) zum insbesondere linearen Anfahren einer Übergabeposition bzw. Übergabeeinrichtung (60) zum Aufnehmen eines unbearbeiteten Werkstücks und/oder Abgeben eines bearbeiteten Werkstücks ausgebildet ist, wobei die Übergabeposition bzw. Übergabeeinrichtung (60) direkt auf, über oder unter einer Wechselposition einer Werkstückspindel (101), insbesondere der Drehstation (100) liegt.

6. Bearbeitungsvorrichtung nach einem der voranstehenden Ansprüche, **dadurch gekennzeichnet, dass** die Wechseleinrichtung (30) einen Doppelgreifer (31) aufweist, der um eine zentrale Wendeachse (W) drehbar und entlang dieser linear bewegbar ist und/oder der - insbesondere mittels eines Kurvengetriebes (36) - zur überlagerten Dreh- und Linearbewegung ausgebildet ist, vorzugsweise wobei der Doppelgreifer (31) zwei Greiforgane, insbesondere Sauger aufweist, die parallel zueinander in die gleiche Richtung weisen.

7. Bearbeitungsvorrichtung nach einem der voranstehenden Ansprüche, **dadurch gekennzeichnet, dass** die Wechseleinrichtung (30) dazu ausgebildet ist, die Werkstücke (2) so zu übergeben, dass das Werkstück (2) sowohl in der Frässtation (10) als auch der Drehstation (100) an der gleichen Flachseite bearbeitbar ist.

8. Bearbeitungsvorrichtung nach einem der voranstehenden Ansprüche, **dadurch gekennzeichnet,**
**dass** die Frässtation (10) einen ersten Schlitten (13) mit der Werkstückspindel (11) und einen zweiten Schlitten (16) mit einem Fräsantrieb (14) sowie ein Maschinenbett (17) aufweist,
**dass** das Maschinenbett (17) den ersten Schlitten (13) auf einer ersten Lagerfläche (18) und den zweiten Schlitten (16) auf einer zweiten Lagerfläche (19) lagert, und
**dass** die beiden Lagerflächen (18, 19) um mehr als 45 Grad zueinander geneigt sind und/oder die zweite Lagerfläche (19) parallel zur Drehachse (D) des Fräsantriebs (14) verläuft.

9. Bearbeitungsvorrichtung nach Anspruch 8, **dadurch gekennzeichnet, dass** die zweite Lagerfläche (19) um mehr als 45 Grad zur Horizontalen geneigt ist.

10. Bearbeitungsvorrichtung nach Anspruch 8 oder 9, **dadurch gekennzeichnet, dass** die Werkstückspindel (11) ausschließlich linear in nur einer Richtung (Z) verschiebbar ist.

11. Bearbeitungsvorrichtung nach einem der voranstehenden Ansprüche, **dadurch gekennzeichnet, dass** die Drehstation (100) einen ersten Fast-Tool-Antrieb (105) aufweist, vorzugsweise wobei die Drehstation einen zweiten Fast-Tool-Antrieb (108) aufweist, der anders als der erste Fast-Tool-Antrieb (105) aufgebaut und/oder der zur alternativen bzw. sequenziellen Bearbeitung desselben Werkstücks vorgesehen ist.

12. Bearbeitungsvorrichtung nach Anspruch 11, **dadurch gekennzeichnet,**
**dass** die Drehstation (100) eine Keilverstellung (110) für den Fast-Tool-Antrieb (105) bzw. die beiden Fast-Tool-Antriebe (105, 108) aufweist, und/oder
**dass** der erste Fast-Tool-Antrieb (105) zwei Werkzeughalter bzw. Werkzeuge (106, 107) zur alternativen bzw. sequenziellen Bearbeitung eines Werkstücks und/oder eine Werkzeugkühlung (117) aufweist.

13. Bearbeitungsvorrichtung nach Anspruch 11 oder 12, **dadurch gekennzeichnet, dass** der erste Fast-Tool-Antrieb (105) und der zweite Fast-Tool-Antrieb (108) gemeinsam auf einem Schlitten (111) angeordnet sind.

14. Bearbeitungsvorrichtung nach einem der voranstehenden Ansprüche, **dadurch gekennzeichnet, dass** die Bearbeitungsvorrichtung (1) zwei Werkstückspindeln (11, 101), aufweist, die in Richtung ihrer parallelen bzw. koaxialen Drehachsen (C) versetzt bzw. beabstandet sind.

15. Bearbeitungsvorrichtung nach einem der voranstehenden Ansprüche, **dadurch gekennzeichnet, dass** die Wechseleinrichtung (30) zwischen den Werkstückspindeln (11, 101) oder deren Spannfutter (12, 102) angeordnet ist, und/oder dass die Frässtation (10) und die Drehstation (100) jeweils nur maximal zwei gestapelte Bewegungsachsen (X, Z) aufweisen.

## Claims

1. Processing apparatus (1) for processing optical workpieces, in particular lenses (2),
with a milling station (10) comprising a first workpiece spindle (11),
with a turning station (100) comprising a second workpiece spindle (101), and
with a changing device (30) for changing the workpieces to be processed from the first workpiece spindle (11) to the second workpiece spindle (101),
**characterized**
**in that** the workpiece spindles (11, 101) or their chucks (12, 102) face one another.

2. Processing apparatus according to claim 1, **characterized in that** the first and/or second workpiece spindle (11, 101) is/are exclusively linearly displaceable in only one direction.

3. Processing apparatus according to claim 1 or 2, **characterized in that** the milling station (10) and the turning station (100) each have a separate machine bed (17, 114) and **in that** the changing device (30) is mounted independently of and/or between the machine beds (17, 114).

4. Processing apparatus according to one of the preceding claims, **characterized in that** the changing device (30) has an in particular vertical swivel axis (B) for changing between the milling station (10) and turning station (100) and vice versa.

5. Processing apparatus according to one of the preceding claims, **characterized in that** the changing device (30) is configured for moving, in particular linearly, to a transfer position and/or transfer device (60) for picking up an unprocessed workpiece and/or handing over a processed workpiece, the transfer position and/or transfer device (60) being located directly on, above or below a change position of a workpiece spindle (101), in particular of the turning station (100).

6. Processing apparatus according to one of the preceding claims, **characterized in that in that** the changing device (30) has a double gripper (31) which is rotatable about a central turn axis (W) and is movable linearly along the latter and/or which - in particular by means of a cam mechanism (36) - is configured for superimposed rotary and linear movement, preferably wherein the double gripper (31) has two gripping members, in particular suckers, which point parallel to each other in the same direction.

7. Processing apparatus according to one of the preceding claims, **characterized in that** he changing device (30) is configured to transfer the workpieces (2) in such a way that the workpieces (2) are processable on the same flat side both in the milling station (10) and in the turning station (100).

8. Processing apparatus according to one of the preceding claims, **characterized**
**in that** the milling station (10) has a first carriage (13) with the workpiece spindle (11) and a second carriage (16) with a milling drive (14) as well as a machine bed (17),
**in that** the machine bed (17) supports the first carriage (13) on a first bearing surface (18) and the second carriage (16) on a second bearing surface (19), and
**in that** the two bearing surfaces (18, 19) are inclined to each other by more than 45 degrees and/or the second bearing surface (19) runs parallel to the rotation axis (D) of the milling drive (14).

9. Processing apparatus according to claim 8, **characterized in that** the second bearing surface (19) is inclined by more than 45 degrees to the horizontal.

10. Processing apparatus according to claim 8 or 9, **characterized in that** the workpiece spindle (11) is exclusively linearly displaceable in only one direction (Z).

11. Processing apparatus according to one of the preceding claims, **characterized in that** the turning station (100) has a first fast tool drive (105), preferably wherein the turning station has a second fast tool drive (108) which is constructed differently from the first fast tool drive (105) and/or which is provided for alternative and/or sequential processing of the same workpiece.

12. Processing apparatus according to claim 11, **characterized**
**In that** the turning station (100) has a wedge adjustment (110) for the fast tool drive (105) and/or the two fast tool drives (105, 108), and/or
**in that** the first fast tool drive (105) has two tool holders and/or tools (106, 107) for alternative and/or sequential processing of a workpiece and/or has a tool cooling (117).

13. Processing apparatus according to claim 11 or 12, **characterized in that** the first fast tool drive (105) and the second fast tool drive (108) are arranged together on a carriage (111).

14. Processing apparatus according to one of the preceding claims, **characterized in that** the processing apparatus (1) comprises two workpiece spindles (11, 101) which are offset and/or spaced apart in the direction of their parallel and/or coaxial rotation axes (C).

15. Processing apparatus according to one of the preceding claims, **characterized in that** the changing device (30) is arranged between the workpiece spindles (11, 101) or their chucks (12, 102), and/or **in that** the milling station (10) and the turning station (100) each have only a maximum of two stacked movement axes (X, Z).

## Revendications

1. Appareil d'usinage (1) pour l'usinage de pièces optiques, en particulier de lentilles (2),
avec une station de fraisage (10) qui présente une première broche porte-pièce (11),
avec une station de rotation (100) qui présente une deuxième broche porte-pièce (101), et
avec un dispositif de changement (30) pour le changement des pièces à usiner de la première broche porte-pièce (11) à la deuxième broche porte-pièce (101),
**caractérisé**
**en ce que** les broches porte-pièce (11, 101) ou leurs mandrins de serrage (12, 102) sont tournés l'un vers l'autre.

2. Appareil d'usinage selon la revendication 1, **caractérisé en ce que** la première et/ou la deuxième broche porte-pièce (11, 101) est ou sont déplaçables exclusivement linéairement dans une seule direction.

3. Appareil d'usinage selon la revendication 1 ou 2, **caractérisé en ce que** la station de fraisage (10) et la station de rotation (100) présentent respectivement un banc de machine (17, 114) séparé et **en ce que** le dispositif de changement (30) est monté indépendamment et/ou entre les bancs de machine (17, 114).

4. Appareil d'usinage selon l'une quelconque des revendications précédentes, **caractérisé en ce que** le dispositif de changement (30) présente un axe de pivotement (B) en particulier vertical pour le changement entre la station de fraisage (10) et la station de rotation (100) et inversement.

5. Appareil d'usinage selon l'une quelconque des revendications précédentes, **caractérisé en ce que** le dispositif de changement (30) est réalisé pour l'approche en particulier linéaire d'une position de transfert et/ou d'un dispositif de transfert (60) pour recevoir une pièce non usinée et/ou délivrer une pièce usinée, la position de transfert et/ou le dispositif de transfert (60) se trouvant directement sur, au-dessus ou en dessous d'une position de changement d'une broche porte-pièce (101), en particulier de la station de rotation (100).

6. Appareil d'usinage selon l'une quelconque des revendications précédentes, **caractérisé en ce que** le dispositif de changement (30) présente une pince double (31) qui peut tourner autour d'un axe de retournement central (W) et est déplaçable linéairement le long de celui-ci et/ou qui est réalisée pour le déplacement rotatif et linéaire superposé, en particulier au moyen d'un mécanisme à cames (36), de préférence la pince double (31) présentant deux organes de préhension, en particulier des ventouses, qui sont tournés parallèlement l'un à l'autre dans la même direction.

7. Appareil d'usinage selon l'une quelconque des revendications précédentes, **caractérisé en ce que** le dispositif de changement (30) est réalisé pour transférer les pièces (2) de telle sorte que la pièce (2) puisse être usinée sur le même côté plat aussi bien dans la station de fraisage (10) que dans la station de rotation (100).

8. Appareil d'usinage selon l'une quelconque des revendications précédentes, **caractérisé en ce que**
la station de fraisage (10) présente un premier chariot (13) avec la broche porte-pièce (11) et un deuxième chariot (16) avec un entraînement de fraisage (14) ainsi qu'un banc de machine (17),
le banc de machine (17) supporte le premier chariot (13) sur une première surface de palier (18) et le deuxième chariot (16) sur une deuxième surface de palier (19), et
les deux surfaces de palier (18, 19) sont inclinées l'une par rapport à l'autre de plus de 45 degrés et/ou la deuxième surface de palier (19) s'étend parallèlement à l'axe de rotation (D) de l'entraînement de fraisage (14).

9. Appareil d'usinage selon la revendication 8, **caractérisé en ce que** la deuxième surface de palier (19) est inclinée de plus de 45 degrés par rapport à l'horizontale.

10. Appareil d'usinage selon la revendication 8 ou 9, **caractérisé en ce que** la broche porte-pièce (11) est déplaçable exclusivement linéairement dans une seule direction (Z).

11. Appareil d'usinage selon l'une quelconque des revendications précédentes, **caractérisé en ce que** la station de rotation (100) présente un premier entraînement d'outil rapide (105), de préférence la station de rotation présentant un deuxième entraînement d'outil rapide (108) qui est construit différemment du premier entraînement d'outil rapide (105) et/ou qui est prévu pour l'usinage alternatif et/ou séquentiel de la même pièce.

12. Appareil d'usinage selon la revendication 11, **caractérisé en ce que** la station de rotation (100) présente un réglage de coin (110) pour l'entraînement d'outil rapide (105) ou les deux entraînements d'outil rapide (105, 108), et/ou le premier entraînement d'outil rapide (105) présente deux porte-outils et/ou outils (106, 107) pour l'usinage alternatif et/ou séquentiel d'une pièce et/ou présente un refroidissement d'outil (117).

13. Appareil d'usinage selon la revendication 11 ou 12, **caractérisé en ce que** le premier entraînement d'outil rapide (105) et le deuxième entraînement d'outil rapide (108) sont disposés conjointement sur un chariot (111).

14. Appareil d'usinage selon l'une quelconque des revendications précédentes, **caractérisé en ce que** l'appareil d'usinage (1) présente deux broches porte-pièce (11, 101) qui sont décalées et/ou espacées dans la direction de leurs axes de rotation (C) parallèles et/ou coaxiaux.

15. Appareil d'usinage selon l'une quelconque des revendications précédentes, **caractérisé en ce que** le dispositif de changement (30) est disposé entre les broches porte-pièce (11, 101) ou leurs mandrins de serrage (12, 102), et/ou **en ce que** la station de fraisage (10) et la station de rotation (100) présentent respectivement au maximum deux axes de déplacement (X, Z) empilés.
